# EUROPEAN PATENT SPECIFICATION

(11) **EP 2 926 058 B1**
(45) Date of publication and mention of the grant of the patent: **04.01.2017**
(21) Application number: 13799658.3
(22) Date of filing: 29.11.2013
(51) Int. Cl.: F24F 13/22, F24F 12/00

(54) **DRAIN ARRANGEMENT FOR HEAT RECOVERY UNIT**
ABFLUSSANORDNUNG FPR WÄRMERÜCKGEWINNUNGSEINHEIT
AGENCEMENT DE DRAIN POUR UNITÉ DE RÉCUPÉRATION DE CHALEUR

(30) Priority: 30.11.2012 GB 201221651
(43) Date of publication of application: 07.10.2015
(73) Proprietor: Greenwood Air Management Limited, Rustington West Sussex BN16 3LF (GB)
(72) Inventor: RAHIMI, Darius, Rustington Sussex BN16 3LF (GB); FLACK, Gordon, Rustington Sussex BN16 3LF (GB); BELLE, Mark, Rustington Sussex BN16 3LF (GB); BYNE, Daniel, Rustington Sussex BN16 3LF (GB)
(74) Representative: Gardiner, Stephen Robin
(86) International application number: PCT/GB2013/053169
(87) International publication number: WO 2014/083355

(56) References cited:
- EP-A2- 1 821 042
- DE-A1-102009 032 047
- FR-A1- 2 831 245
- GB-A- 2 374 661
- US-A1- 2001 032 714
- US-A1- 2002 164 944

## Description

The invention relates to heat exchangers or heat recovery units used in ventilation systems. In particular, the invention relates to the drainage arrangements of such heat recovery units.

Heat exchangers are used in many technologies for transferring heat between two fluid flows. The present invention relates more specifically to gas heat exchangers where heat is exchanged between two different gas flows.

Ventilation systems can either be balanced or unbalanced. In an unbalanced system, air is extracted from a building (typically certain areas of the building such as kitchens and bathrooms) and is expelled to the outside in order to get rid of unwanted moisture and/or odours. The system relies on the extracted air being replaced naturally by air flowing into the building through natural openings, such as through window vents, or under doors. This system works well in older "leakier" buildings where there are plenty of natural openings through which air can enter or leave the building.

However in more modern buildings improved seals tend to be employed around windows and doors in order to improve the thermal efficiency of the building and reduce the amount of warm air escaping from within the building. In such cases, a balanced ventilation system may be more appropriate. A balanced ventilation system does not just extract air from the building and exhaust it to the outside, but also draws replacement air into the building, thus maintaining the air pressure within the building. Such systems therefore have one flow path for air coming into the building and another flow path for air being expelled from the building. The air being drawn in from outside is typically colder than the air being expelled and therefore, for improved thermal efficiency, a heat exchanger can be employed to transfer some of the heat from the outgoing air flow into the incoming air flow.

Air within the building is heated to a desired temperature via normal heating systems and the heat recovery unit then aims to minimise heat losses in the exhausted air by using it to heat up the incoming cold air, thus reducing load on (and energy usage of) the heating system. It will be appreciated that the system can also be used in warm conditions where the inside air is cooled to a temperature below the outside temperature and the heat exchanger operates by using the cold outgoing air to cool down the warm incoming air, again improving thermal efficiency and reducing load on the cooling system.

As warm air cools it can hold less moisture. If air cools to such a temperature that it can no longer hold all of the moisture in vapour form then some of the moisture condenses into liquid. In a heat exchanger as described above, the outgoing air flow is therefore liable to be cooled to the extent that condensation will occur. This can be a particular problem in building ventilation systems where the air being expelled from the building is typically extracted from the "wet areas" such as the kitchen and/or bathrooms where the air is heavily laden with moisture.

Condensed liquid inside a heat exchanger must be drained away. A drain passage is therefore normally provided which provides a channel for condensed water to flow out of the heat exchanger. This drain passage is then connected to the building's waste water system to carry the condensed water safely away from the building.

A typical gas heat exchanger (heat recovery unit) comprises four gas ports: one for outward bound gas entering the heat recovery unit, one for outward bound gas leaving the heat recovery unit, one for inward bound gas entering the heat recovery unit and one for inward bound gas leaving the heat recovery unit. The heat exchanger simply provides a thermally efficient contact area between the two air flows and it can therefore be appreciated that the heat exchanger (and the heat recovery unit) itself is symmetrical. In other words, it does not matter which air flow path is used for the inward bound gas and which air flow path is used for the outward bound gas. However the problem of condensation is asymmetrical; it is only a problem for one air flow at a time, usually the moist outward bound gas which is being cooled.

Two solutions to this asymmetry problem have been used to date. The first solution is to provide a single condensation drain and to specify which air flow path (and hence which ports) relates to inward bound gas and which relates to outward bound gas. This ensures that the connector drain is always provided on the outward bound air path. However the symmetrical nature of the system can be beneficial to the installer. When a heat recovery unit is installed in a building (often in an awkward position such as in a cupboard or other tight space), it is convenient if the installer is not restricted by which ports have to be used. The flexibility of being able to choose ports means that ducts can be routed more simply and neatly. This can have the further benefit of reducing the resistance to the air flows and thereby increasing the energy efficiency of the system as a whole.

The second solution to the asymmetry problem is to provide two condensation drains, one for each gas flow path. This then allows the system to be used either way round. However, this second solution introduces a further problem: Only one drain will be in use at any one time. During installation, the installer selects which way round to use the heat exchanger. This in turn determines which drain is to be used for condensate. The other drain provides a liquid, and hence a gas, passage by which air can flow into or out of the system. The unused condensation drain in the inward bound gas flow path would allow air to be drawn into the system from within the building (assuming that the heat exchanger is mounted within the building) rather than from the outside. This reduces the efficiency of the ventilation system in turning over the air within the building as the system then has to work harder to achieve the same level of air replacement within a given time period.

Therefore if two condensation drains are provided, it is necessary to block off the drain which is not in use so as to prevent the above problem and retain the efficiency of the ventilation system. A simple cap or stopper can be used to block the unused drain.

However a problem with providing two condensation drains is that there is potential for poor or incorrect installation. For example a failure to properly block off the unused drain leads to a loss of inefficiency as described above, but worse than that it is possible to connect up the wrong condensation drain outlet, leaving the active drain outlet unconnected to the waste water system. In such cases, condensation will simply flow out of the heat recovery unit and can cause serious damage to the fabric of the building before the fault is noticed and corrected. In winter conditions, a domestic heat recovery unit can generate around 2 litres of condensate per day. According to the invention there is provided a gas heat recovery unit comprising two gas flow paths in heat exchange contact, a condensate drainage path for each of said two gas flow paths for draining condensate from the respective gas flow path, said two condensate drainage paths being fluidly connected to a common drainage outlet of the heat recovery unit and each of said two condensate drainage paths comprising a valve which allows passage of liquid but not gas from the respective gas flow path towards the common drainage outlet.

The provision of a common drainage outlet simplifies the installation process as it is no longer possible to plumb the unit in the wrong way. Also, there is no requirement to block the unused condensate drain. This reduces the chances of faulty set up and also makes the installation quicker as there are fewer steps.

The liquid flow paths for condensate necessarily also act as gas flow paths. As they both connect to a common drain outlet, the drainage paths themselves are fluidly connected together and in the absence of valves would provide a connection between the two sides of the heat exchanger, i.e. it would allow cross-leakage or cross-contamination. As well as reducing the efficiency of the unit, such an arrangement would allow odours, e.g. from a WC to transfer from the outgoing air stream across to the incoming air stream in other parts of the building. To prevent this cross-leakage or cross-contamination, valves are positioned in both drainage paths so as to prevent air flow from the main air flow paths towards the common drainage outlet.

The term "valve" is used here to encompass any selective flow arrangement which can allow liquid to pass (so as to allow condensate to escape the unit), but prevents gas flow (so as to prevent cross-leakage).

Having condensate drains on both flow sides of the heat exchanger unit means that the handedness of the unit (i.e. which flow path is selected for incoming air and which flow path for outgoing air) can be changed without requiring any alterations to the condensate drainage system. Condensate can automatically be drained from whichever side the condensate forms. In prior art devices, changing the handedness of the unit has typically required physically rotating the device to move the ports from one side to the other. This would usually involve either the controls or filters needing to be swapped so that they are accessible from the opposite side of the unit. With the present invention, no such rotation of the device is needed as the inlet and outlet ports are simply redefined without any physical modifications of the device being required.

Preferably equivalent sensors (such as temperature and humidity sensors are provided in both airflow paths so that the necessary measurements can be taken for correct operation of the system regardless of which way round the unit is set up. The central control of the unit then just needs to know which path relates to incoming air and which relates to outgoing air (and therefore which sensor signals relate to incoming air and which relate to outgoing air) so that it can control the unit appropriately, e.g. altering the speeds of the fans which drive air along the air flow paths, engaging a boost mode if necessary (e.g. due to high humidity generated during a shower or kitchen activity) and engaging a summer bypass mode to avoid further heat exchange if appropriate. The unit also uses these measurements in frost protection algorithms. This set up can be done simply by selecting an option or setting a switch on the unit's controls. No physical modifications are required to the unit. Preferably each of the four ports of the heat recovery unit has a temperature and a humidity sensor.

There is an additional benefit of the arrangement of the invention; although in most circumstances condensate only tends to form on one side of the unit (e.g. from the outgoing warm moist air from bathrooms, etc. being vented to a colder exterior), there are circumstances when condensate can be formed on the opposite side of the heat exchanger. This can happen in climates where warm moist air develops outside (e.g. in thundery conditions) while air conditioning is being used inside the building to cool the interior air. Such conditions occur in southern Europe and the Far East for example. These conditions are automatically handled by the present invention as both incoming and outgoing airflows are always connected for drainage to the common drainage outlet.

Any kind of valve may be used in the heat recovery unit so long as it passes liquid but prevents gas flow. One option is to use a liquid trap, e.g. a U-bend arrangement. As the condensate fills the trap it seals the passage off from gas flow, but still permits liquid to flow round the trap and towards the drain. However a problem with liquid traps occurs in hot dry periods, e.g. in summer when a prolonged period of warm weather can cause the water in the trap to evaporate to the extent that the passage is open to gas flow again. Therefore the valves preferably comprise a float valve. Each float valve comprises a float which, in the absence of liquid, sits on a valve seat, blocking the valve outlet and thus preventing gas flow through the valve. However when sufficient liquid is present, the float will rise, opening the valve outlet and allowing the liquid to flow through.

In some preferred embodiments the valves comprise a combination of a float and a liquid trap. When the trap is filled, the float will be in a floating state, so liquid flow through the valve is possible. The valve seat for the float is arranged at a higher level than the liquid level that is required to seal the trap so that if evaporation occurs, the float will seal the valve from gas flow before the trap permits gas flow. At the same time the trap is designed so that the normal liquid level of the trap when it is in use is above the valve seat so that the float is in a floating state.

Preferably the float valve comprising a ball float, i.e. a spherical float. The valve seat is preferably a frustoconical shape, open at both ends such that the ball float sits within the conical portion and in contact therewith in a sealed state and rises upwards therefrom, losing contact to open the valve.

In one preferred embodiment the float valve comprises a float in vertical tube. The tube contains the ball of the ball valve, allowing it to rise and fall with liquid level. The tube may be a condensate drainage channel. Alternatively or additionally, the tube may take condensate flows from more than one drainage channel which collect condensate from different regions of the unit and all flow into the tube. For example, there may be a channel carrying condensate from the heat exchanger and a channel carrying condensate from a motor scroll. The majority of the condensate comes from the heat exchanger, but condensation can also occur in the ducting which connects the unit. Such condensate flows back towards the unit and collects in the motor scroll. Therefore a drainage channel from the motor scroll is preferably provided.

As described above, each drainage path (i.e. on each side of the heat exchanger) may further comprise a liquid trap. This arrangement will be more suitable for larger heat exchange units which have space for more complex drainage arrangements.

In smaller heat exchange units, space for drainage channels and valves is more limited. Smaller heat recovery units cannot support larger flow rates and therefore are normally suitable for smaller properties, e.g. up to a two bedroom flat. Such properties typically have limited space and so it is often desirable to be able to fit the heat exchange unit into a standard sized kitchen cupboard (approximately 600 mm deep by 800 mm high). To fit the drainage arrangement into the unit in the more compact space underneath the heat exchanger, it is not possible to provide a tall vertical tube to house the ball of the ball valve and to provide drainage channels above the ball. A shorter tube is used instead and this is located directly underneath the heat exchanger. As there is no room for drainage channels to be provided above the ball valve, the condensate from the heat exchanger is routed in from the side of the ball valve so that it flows around the base of the ball, causing it to rise off its valve seat when sufficient liquid is present. The drainage channels may be provided simply by angling the floor down towards the ball valves from either side of the heat recovery unit. Such sloping floors will also serve to drain condensate from the motor scrolls to the ball valves providing a suitable drainage hole is provided in the motor scrolls.

It will be appreciated that all directional indications provided here are with respect to the in-use orientation of the heat recovery unit. Any given heat recovery unit has a defined orientation for use so that condensate will flow under gravity to the drainage outlet.

Preferably caps are provided over the ball valves, especially in the smaller units where the ball valves are constrained in shorter tubes. The caps hold the balls securely within the tubes so that they do not fall out during assembly or transportation when the unit may be rotated out of its normal alignment. Preferably the tubes have a downwardly projecting tube which is of slightly smaller diameter than the balls. This projection serves to secure the ball even better within the tube, allowing only just enough room for the ball to rise off its seat, allowing liquid to escape, while not allowing it further room for manoeuvre within the tube.

Preferably therefore each float valve comprises a float in a short vertical tube, the tube being capped at the top. The tube preferably has a removable cap so that the valve can be accessed for cleaning or maintenance.

In some cases it is desirable to install a heat recovery unit in a different orientation, e.g. on its side, so that it can be installed in a ceiling void or at the top of a cupboard. When the unit is turned on its side the condensate flow is affected and the valves have to be moved so that the unit operates correctly. To avoid increasing the size of the unit, the valves can no longer be located underneath the heat exchanger. Instead they are preferably located to the side.

The drainage valves of such an arrangement are located closer to the fans of the unit. This causes a problem with the float valves as the air currents passing in close proximity to the float valves can cause the floats to be displaced, opening the valves when they should be closed. To avoid this the float valves are preferably protected from the airflows within the unit by a cover, the cover providing a housing in which the float can rise and fall above the valve seat. Therefore in some preferred embodiments each float valve comprises a valve seat, a float positioned above the valve seat and a cover positioned over the float. The cover preferably comprises a hollow tube closed at the upper end. This allows airflow to pass directly over the float without risk of displacing it as the float is protected by the cover. The cover is preferably made from foam. In particular, the foam is an expanded polystyrene (EPS). The molding process for EPS results in a water impermeable skin which prevents water from soaking in. The cover preferably allows only a narrow condensate access channel for condensate to flow to the valve. Keeping the access channel small prevents turbulence from the airflows within the unit from affecting the valve and displacing it unnecessarily.

The outlets from the two drainage channels can be routed in any appropriate way to the single common drainage outlet, but the most preferred arrangement is that both valves feed into a collection tray which directs condensate towards the common drainage outlet.

Preferred embodiments of the invention will now be described, by way of example only, and with reference to the accompanying drawings in which:
- Fig. 1: shows a first embodiment of the invention;
- Fig. 2: shows a second embodiment of the invention; and
- Fig. 3: shows a third embodiment of the invention.

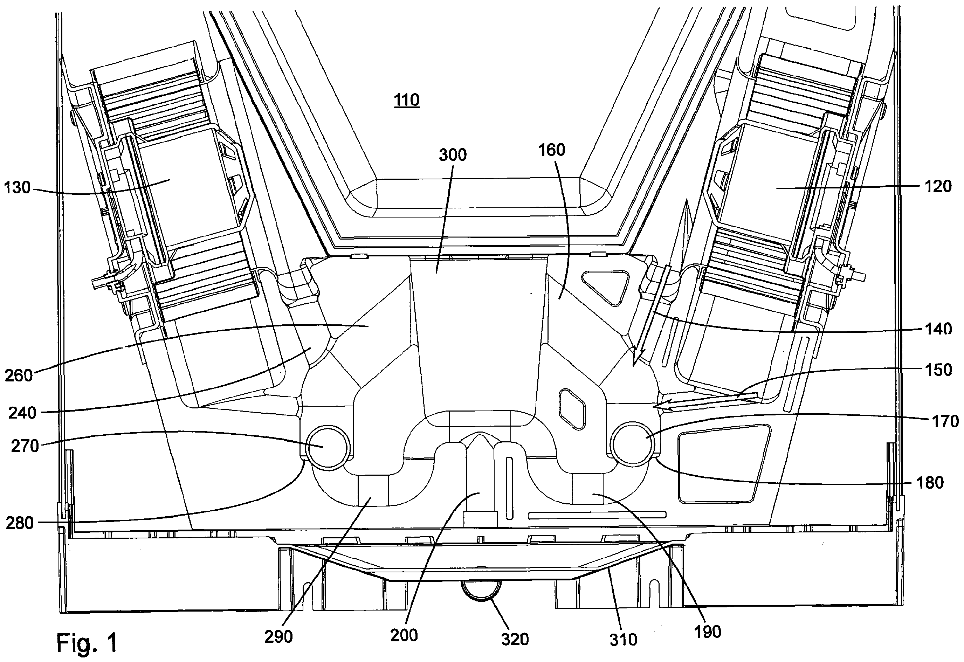

Fig. 1 shows a cut-through of the lower portion of a heat recovery unit 100. The heat recovery unit 100 of this first embodiment is a relatively large version of the unit with more room for drainage systems than the second and third embodiments which are described below.

The heat exchanger is placed in heat exchanger compartment 110. The heat exchanger is removable for cleaning and maintenance and is removed in Fig. 1 for clarity. Fans 120 and 130 draw air through the heat exchanger. Fan 120 draws air along a first air flow path while fan 130 draws air along a second air flow path. The first and second air flow paths are brought into heat exchange contact by the heat exchanger. The first and second air flows are kept physically separate. Only heat is exchanged between them, not moisture.

The following description is given in relation to one side of the heat exchanger, but it can be seen that the other side is symmetrical and has the same drainage features.

As the warmer airstream is cooled by the cooler airstream, condensation may be formed, especially if the warmer airstream is also humid, e.g. if it is exhausting air from a bathroom or kitchen. The liquid condensate drains under gravity out of the heat exchanger and is directed along a condensate drainage path shown by arrow 140. At the same time, any condensation formed in the ducting (connected to the top of the unit, not shown) drains back down into the unit to the bottom of the motor scroll (the housing which surrounds the centrifugal fan) and drains out along a condensate drainage path shown by arrow 150.

Drainage channels 140, 150 drain into a common tube 160. At the bottom of tube 160 is a float valve with a spherical ball float 170 resting on a valve seat 180. Underneath the float valve 170, 180 is a liquid trap (U-bend) 190 which feeds into a common outlet pipe 200.

On the opposite side of the heat exchanger, i.e. the other airflow within the heat recovery unit, a similar drainage structure is provided by drainage channel 240 from the heat exchanger, drainage channel 250 from the motor scroll, tube 260, ball float 270, valve seat 280 and U-bend 290. U-bend 290 drains into the common drainage pipe 200 which is shared by the two sides of the unit.

As both sides (both airflow paths) of the heat recovery unit have a drainage system which is permanently in use (i.e. plumbed in and not blocked off), the heat recovery unit can be configured with either airflow path being used for warm, humid air. Allowing the installer to select which airflow path to use for the warm, humid air means that the ducting can be connected with minimal tangling. Also, no further physical modification is required for the unit to switch between the two modes (left-handed mode and right-handed mode). That can be selected by a button or within an electronic menu system. The unit needs to know which side is which for proper analysis of temperature and humidity measurements taken within the airstreams and for controlling the fans appropriately. However, condensation will be dealt with automatically by the drainage systems regardless of which way the unit is installed.

Providing a single common drainage pipe 200 (and outlet 320 as described below) means that there is less possibility of error during the installation process. The installer simply connects the only drainage outlet to the waste water system. There is no second or alternative drainage outlet that needs to be blocked off or which could be wrongly connected to the waste water system.

The U-bends 190, 290 in this embodiment provide a gas seal when filled with liquid. Only one side (190 or 290) will be receiving condensate at any one time, and so it will most likely be just one side that is filled with liquid. However only one side needs to be sealed at any one time. If there is insufficient liquid to fill the U-bend, then the ball valves 170, 270 will rest on their respective seats 180, 280 and provide a gas seal. However if condensate flows into the tubes 160, 260, the balls 170, 270 will float, rising off their respective seats 180, 280 and allowing the condensate to drain away.

The purpose of the valves is to prevent a cross-contamination airflow from one side of the heat exchanger to the other, i.e. from one airflow path to the other airflow path. For example, if the balls 170, 270 were missing from the arrangement shown in Fig. 1, and if both U-bends were open to gas flow (e.g. if all condensate had evaporated due to warm, dry conditions), there would be a gas flow path from the right hand side of the heat exchanger via drainage channels 140, 150, through valve seat 180, U-bend 190, U-bend 290, valve seat 280 and drainage channels 240, 250 to the left hand side of the heat exchanger (as viewed in Fig. 1).

Given that one airflow path is usually used to vent air from kitchens and bathrooms (which may include unwanted odours) to the outside and the other airflow path is used to draw fresh air into the building, cross-contamination could lead to the unwanted odours being drawn across into the fresh incoming airstream and being recirculated into the building. This is undesirable and hence it is necessary to ensure that this cross-contamination pathway is always blocked to gas flow, while always allowing liquid flow from both directions. This is achieved by the ball valves 170, 270 which only open when there is condensate to be drained.

The ball valves are held within tubes 160, 260 by block 300. Block 300 can be removed when the heat exchanger is removed from the unit and allows access to the tubes 160, 260 for cleaning or maintenance. The balls can be inserted or removed in this fashion. However, when block 300 is in place (and held in place by the heat exchanger), the balls 170, 270 are trapped within tubes 160, 260 so they cannot escape or get lost even if the unit is rotated out of its standard orientation e.g. during transportation or installation.

Underneath the common drainage outlet 200, there is a drip tray 310 which directs fluid out of outlet 320 which provides a connector for connecting to the waste water system.

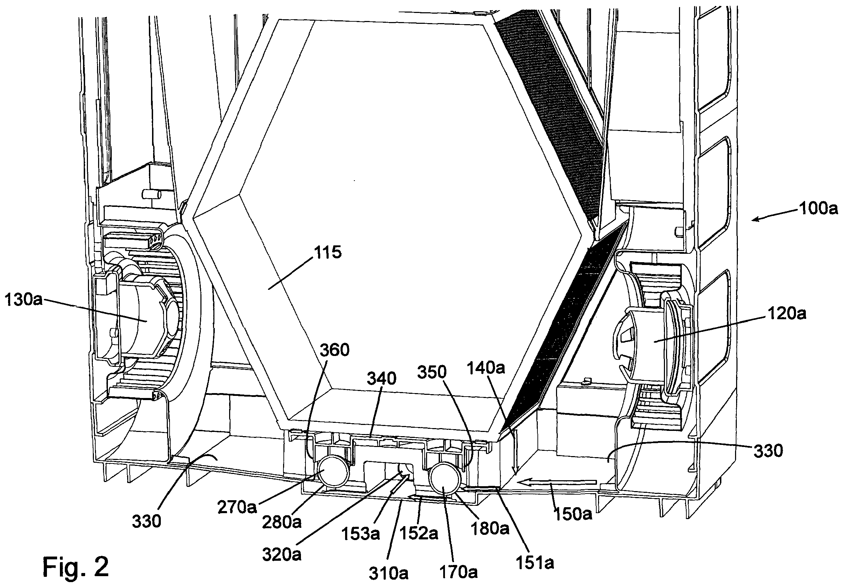

Fig. 2 shows an alternative embodiment. This second embodiment is a smaller unit than that shown in Fig. 1. In order to fit the unit into a smaller space without compromising the size of the heat exchanger (and thereby the efficiency of the unit as a whole), a smaller, more compact drainage system is provided for condensate.

Reference numerals in Fig. 2 are the same as in Fig. 1 where appropriate, but with a suffix 'a' appended. Unless indicated to the contrary, these features function in the same way as described above and repeat explanation will be avoided.

Due to the smaller size of the unit 100a of the second embodiment, there are no U-bends. Both sides of the unit still have a ball valve (ball floats 170a, 270a and valve seats 180a, 280a). However, instead of the condensate flowing into the valve from above as in the first embodiment, the condensate instead flows in to the valve from the side as indicated by arrow 151 a. Condensate from the heat exchanger flows down to the bottom of the unit 330 which is sloped down towards the ball valve 170a so as to direct condensate through passage 151 a under gravity. Condensate from the motor scroll also drains along the sloped bottom 330 of unit 100a towards the same passage 151a. Condensate which has drained through the valve is captured in drip tray 310a and directed out through outlet 320a as indicated by arrows 152a and 153a.

As in the first embodiment, an equivalent, symmetrical drainage system is provided on both sides of the unit 100a, both leading to a common drainage outlet 320a with a single connection to the waste water system.

A capping plate 340 is provided above the valves to separate them from the heat exchanger 115 (the flow paths within heat exchanger 115 have been omitted for clarity). When heat exchanger 115 has been removed, the plate 340 can be removed to provide access to the ball floats 170a, 270a and seats 180a, 280a for maintenance and cleaning. The plate 340 comprises two downwardly projecting tubes 350, 360; one for each ball float 170a, 270a. These tubes 350, 360 surround the upper parts of the balls 170a, 270a and thus provide a locating mechanism for the balls 170a, 270a. This stops the balls 170a, 270a from moving too much and becoming distanced from the valve seats 180a, 280a during transport or installation. The projecting tubes 350, 360 leave enough room for the balls 170a, 270a to rise up off the valve seats 180a, 280a so that condensate can flow through the valve, while preventing the balls 170a, 270a from moving too far.

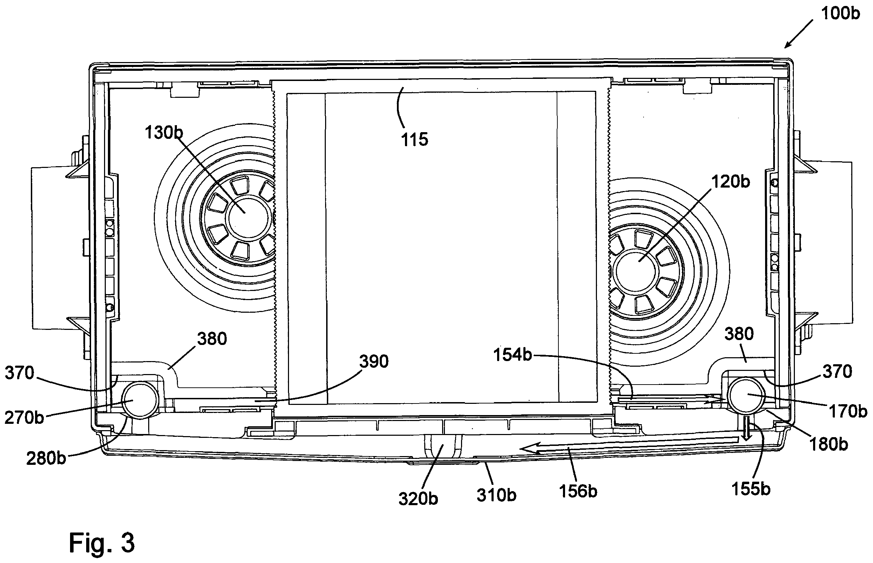

Fig. 3 shows a third embodiment of the invention. This third embodiment differs from the first and second embodiments in that it is designed for use in a different orientation, i.e. with the heat exchanger lying flat (both airflow paths substantially horizontal) rather than upright (both airflow paths having a vertical component). To avoid increasing the height of the unit and at the same time avoid decreasing the height of the heat exchanger (which would decrease the efficiency of the unit as a whole), the ball valves cannot be located underneath the heat exchanger.

Reference numerals in Fig. 3 are the same as in Fig. 1 where appropriate, but with a suffix 'b' appended. Unless indicated to the contrary, these features function in the same way as described above and repeat explanation will be avoided.

Due to the change in orientation of normal operation of this third embodiment, the inlets and outlets for the airstreams have been moved to the sides of the units rather than the top of the unit. However the airflow paths are still broadly the same.

The ball valves 170b, 180b, 270b, 280b have been moved to the sides of the unit away from the heat exchanger 115. However, moving the ball valves into these positions moves them much closer to the strong airflows within the unit. These airflows therefore have a potentially stronger influence on the ball valves through turbulence and/or pressure fluctuations. To protect the ball floats 170b, 270b from being displaced from their valve seats 180b, 280b, it is necessary to provide a protective cover 380 over the valves.

The protective cover 380 is provided directly between the ball valve and the adjacent strong airflow (between the ball valve and the adjacent air outlet) so as to protect the ball valve from the airflow. The cover 380 provides a narrow liquid channel 390 running from the heat exchanger 115 to the ball valve 170b, 180b or 270b, 280b for condensate to flow from the heat exchanger to the ball valve. This flow is indicated by arrow 154b in Fig. 3. Condensate then flows through the valve seat 180b, 280b as indicated by arrow 155b and then flows along the drip tray 310b which is sloped down towards the centre so as to guide the flow towards the drainage outlet 320b as indicated by arrow 156b.

By keeping the liquid channel 390 narrow, turbulence does not penetrate the channel 390 and does not adversely affect the ball valve. However, condensate can flow down the channel 390, through the ball valve and eat of the unit.

The protective cover 380 is made from expanded polystyrene (EPS). EPS is light and inexpensive to use. The molding process for EPS results in a water resistant skin forming on the outside of the molded piece which prevents condensate from entering other than via the channel 390. Condensate draining back from the motor scroll will flow off the cover 380 and then through channel 390 to reach the ball valve.

Each of the above three embodiments are designed for domestic use within a flat or house. However it will be appreciated that the technology could easily be scaled up for larger systems.

## Claims

1. A gas heat recovery unit comprising:
two gas flow paths in heat exchange contact;
a condensate drainage path for each of said two gas flow paths for draining condensate from the respective gas flow path, **characterized in that** said two condensate drainage paths being fluidly connected to a common drainage outlet of the heat recovery unit; and
each of said two condensate drainage paths comprising a valve which allows passage of liquid but not gas from the respective gas flow path towards the common drainage outlet.

2. A gas heat exchanger unit as claimed in claim 1, wherein the valves each comprise a float valve.

3. A gas heat exchanger unit as claimed in claim 2, wherein the float valve comprising a ball float.

4. A gas heat exchanger as claimed in claim 2 or 3, wherein the float valve comprises a float in an open vertical tube.

5. A gas heat exchanger as claimed in claim 4, wherein each drainage path further comprises a liquid trap.

6. A gas heat exchanger as claimed in claim 2 or 3, wherein each float valve comprises a float in a short vertical tube, the tube being capped at the top.

7. A gas heat exchanger as claimed in claim 6, wherein the tube has a removable cap.

8. A gas heat exchanger as claimed in claim 2 or 3, wherein each float valve comprises a valve seat, a float positioned above the valve seat and a cover positioned over the float.

9. A gas heat exchanger as claimed in claim 8, wherein the cover is in the form of a tube closed at the upper end.

10. A gas heat exchanger as claimed in claim 8 or 9, wherein the cover is made from foam, preferably expanded polystyrene.

11. A gas heat exchanger as claimed in any preceding claim, wherein both valves feed into a collection tray which directs condensate towards the common drainage outlet.

## Patentansprüche

1. Gaswärmerückgewinnungseinheit, die Folgendes umfasst:
zwei Gasströmungspfade in Wärmetauschkontakt;
einen Kondensatabflusspfad für jeden der zwei Gasströmungspfade zum Abfließenlassen von Kondensat von dem jeweiligen Gasströmungspfad, **dadurch gekennzeichnet, dass**
die zwei Kondensatabflusspfade mit einem gemeinsamen Abflussauslass der Wärmerückgewinnungseinheit in Strömungsverbindung stehen; und
jeder der zwei Kondensatabflusspfade ein Ventil umfasst, das ein Hindurchfließen von Flüssigkeit, aber kein Hindurchströmen von Gas von dem jeweiligen Gasströmungspfad in Richtung des gemeinsamen Abflussauslasses erlaubt.

2. Gaswärmetauschereinheit nach Anspruch 1, wobei die Ventile jeweils ein Schwimmerventil umfassen.

3. Gaswärmetauschereinheit nach Anspruch 2, wobei das Schwimmerventil einen Kugelschwimmer umfasst.

4. Gaswärmetauscher nach Anspruch 2 oder 3, wobei das Schwimmerventil einen Schwimmer in einem offenen vertikalen Rohr umfasst.

5. Gaswärmetauscher nach Anspruch 4, wobei jeder Abflusspfad des Weiteren eine Flüssigkeitsfalle umfasst.

6. Gaswärmetauscher nach Anspruch 2 oder 3, wobei jedes Schwimmerventil einen Schwimmer in einem kurzen vertikalen Rohr umfasst, wobei das Rohr an seinem oberen Ende verschlossen ist.

7. Gaswärmetauscher nach Anspruch 6, wobei das Rohr eine abnehmbare Kappe hat.

8. Gaswärmetauscher nach Anspruch 2 oder 3, wobei jedes Schwimmerventil einen Ventilsitz, einen Schwimmer, der oberhalb des Ventilsitzes positioniert ist, und eine Abdeckung, die über dem Schwimmer positioniert ist, umfasst.

9. Gaswärmetauscher nach Anspruch 8, wobei die Abdeckung die Form eines Rohres aufweist, das am oberen Ende geschlossen ist.

10. Gaswärmetauscher nach Anspruch 8 oder 9, wobei die Abdeckung aus Schaumstoff, bevorzugt geschäumtem Polystyrol, besteht.

11. Gaswärmetauscher nach einem der vorangehenden Ansprüche, wobei beide Ventile in eine Auffangschale hinein münden, die das Kondensat in Richtung des gemeinsamen Abflussauslasses leitet.

## Revendications

1. Unité de récupération de chaleur de gaz comprenant :
deux trajets d'écoulement des gaz en contact d'échange de chaleur ;
un trajet d'évacuation du condensat pour chacun des deux dits trajets d'écoulement des gaz pour l'évacuation du condensat depuis le trajet d'écoulement des gaz correspondant, **caractérisé en ce que** :
les deux dits trajets d'évacuation du condensat sont raccordés par fluide à une sortie d'évacuation commune de l'unité de récupération de chaleur ; et
chacun des deux dits trajets d'évacuation du condensat comprend une soupape qui laisse passer le liquide, mais pas le gaz, depuis le trajet d'écoulement des gaz correspondant vers la sortie d'évacuation commune.

2. Unité d'échangeur de chaleur de gaz selon la revendication 1, dans laquelle les soupapes comprennent chacune une soupape à flotteur.

3. Unité d'échangeur de chaleur de gaz selon la revendication 2, dans laquelle la soupape à flotteur comprend un flotteur sphérique.

4. Échangeur de chaleur de gaz selon la revendication 2 ou 3, dans lequel la soupape à flotteur comprend un flotteur dans un tube vertical ouvert.

5. Échangeur de chaleur de gaz selon la revendication 4, dans lequel chaque trajet d'évacuation comprend en outre un piège à liquide.

6. Échangeur de chaleur de gaz selon la revendication 2 ou 3, dans lequel chaque soupape à flotteur comprend un flotteur dans un petit tube vertical, le tube étant bouché au sommet.

7. Échangeur de chaleur de gaz selon la revendication 6, dans lequel le tube possède un bouchon amovible.

8. Échangeur de chaleur de gaz selon la revendication 2 ou 3, dans lequel chaque soupape à flotteur comprend un siège de soupape, un flotteur positionné au-dessus du siège de soupape et un couvercle positionné au-dessus du flotteur.

9. Échangeur de chaleur de gaz selon la revendication 8, dans lequel le couvercle a la forme d'un tube fermé à l'extrémité supérieure.

10. Échangeur de chaleur de gaz selon la revendication 8 ou 9, dans lequel le couvercle est en mousse, de préférence en polystyrène expansé.

11. Échangeur de chaleur de gaz selon l'une quelconque des revendications précédentes, dans lequel les deux soupapes alimentent un plateau de collecte qui dirige le condensat vers la sortie d'évacuation commune.
